# EUROPEAN PATENT APPLICATION

(11) **EP 2 464 131 A2**
(43) Date of publication of application: **13.06.2012**
(21) Application number: 11192044.3
(22) Date of filing: 06.12.2011
(51) Int. Cl.: H04N 13/04

(54) **Multi-view point 3D display apparatus**

(30) Priority: 07.12.2010 KR 20100124229
(71) Applicant: Samsung Electronics Co., Ltd, Suwon-si, Gyeonggi-do 442-742 (KR)
(72) Inventor: Choi, Kyu-hwan, 449-712 Gyeonggi-do (KR); Lee, Hong-seok, 449-712 Gyeonggi-do (KR); Song, Hoon, 449-712 Gyeonggi-do (KR); Choi, Yoon-sun, 449-712 Gyeonggi-do (KR); Bae, Jung-mok, 449-712 Gyeonggi-do (KR)
(74) Representative: Greene, Simon Kenneth

(57) **Abstract**

A multi-view point 3D display apparatus using an active optical device is provided. The active optical device may change a path of light without a substantial drop of image resolution.

## Description

### BACKGROUND

### 1. Field

The following description relates to multi-view point three-dimensional (3D) display apparatuses. In particular, the following description relates to forming a multi-view point 3D image by using an active optical device.

### 2. Description of the Related Art

Three-dimensional (3D) image display apparatuses that provide stereo images with a variety of fields, such as games, advertisements, medical images, education, military affairs, etc. have been developed. As high resolution TV sets have increased in popularity, 3D TV sets through which stereo images may be observed by viewers have been commercialized. Thus, a variety of 3D image display technologies have been proposed. Certain 3D image display apparatuses use binocular parallax that provides left and right eyes of viewers with left eye images and right eye images having different view points, such that viewers observe a cubic effect. Such 3D image display apparatuses are divided into glass 3D image display apparatuses requiring special glasses and non-glass 3D image display apparatuses that do not require glasses.

However, since conventional 3D image display apparatuses that provide only two view points of left eye and right eye images do not reflect a change in view points due to movements of viewers, a natural cubic effect is relatively limited. Thus, to provide a more natural motion parallax, multi-view point 3D image display apparatuses for providing multi-view points are proposed. The multi-view point 3D image display apparatuses may provide a plurality of viewing zones with 3D images having different point views. However, multi-view point 3D image display apparatuses may cause interference due crosstalk between different viewing zones, for example, non-stereo regions or pseudoscopic stereo regions between different viewing zones. Further, as the number of view points increases to provide natural motion parallax, a drop resolution of a unit view point may occur. In particular, 3D image display apparatuses that use projection optical systems increase the number of projection optical systems so as to increase the number of view points, which results in an increase in a physical size or volume of the entire system. Moreover, since the conventional 3D image display apparatuses provide only binocular parallax, viewers may not observe 3D images by a single eye.

Super multi-view point 3D image display apparatuses that provide a more natural movement parallax, and that provide stereo images to viewers by a single eye have been proposed. The super multi-view point 3D image display apparatuses provide a single eye of viewers with images having a plurality of view points. To this end, the super multi-view point 3D image display apparatuses form images having view points in regions smaller than the pupil of a single eye. Therefore, images of a plurality of parallax are projected on the retina, which enables viewers to observe a cubic effect through a single eye, thereby producing a more natural cubic effect.

### SUMMARY

Provided are 3D image display apparatuses for displaying multi-view point three-dimensional (3D) images without a substantial reduction of resolution.

Additional aspects will be set forth in part in the description which follows and, in part, will be apparent from the description, or may be learned by practice of the presented examples.

According to one general aspect, a three-dimensional (3D) display apparatus includes an image generating unit which emits light corresponding to an image; and an active optical device which changes a path of light corresponding to the image and providing the image with a plurality of view points.

The active optical device may include an optical plate which changes a direction of refraction of light by adjusting a rotation angle of the optical plate.

The rotation angle of the optical plate may be adjusted mechanically, electrically, or a combination thereof.

The active optical device may include an electro-wetting prism having a refractive surface, a slope of which is changed according to an application of a voltage to the active optical device.

The image generating unit may include any one selected from the group of a liquid crystal display (LCD), a digital micromirror device (DMD), a liquid crystal on silicon (LCOS), and a spatial light modulator (SLM).

The image generating unit may include a holographic 3D printing system.

The holographic 3D printing system may include a light source unit including a plurality of color light sources, and a recording system which records parallax color information for each pixel, with respect to a shape of a volume hologram, to generate a 3D image.

The 3D display apparatus may further include: a 3D optical unit which separates a view point of the image generated by the image generating unit into a plurality of further view points, wherein the 3D optical unit is disposed between the image generating unit and the active optical device.

The 3D optical unit may include any one selected from the group of a lenticular lens array, a micro lens array, and a parallax barrier.

The active optical device may be disposed in an array of a plurality of active optical devices, wherein each of the plurality of active optical devices is individually driven.

The image generating unit may generate images of different view points in a time sequential manner.

The active optical device may refract light with respect to different view points at different angles substantially in synchronization with the image generating unit.

The image generating unit may include a light source and a display panel.

The optical plate may be formed of a material having a different refractive index from an adjacent layer.

The 3D optical unit may multiplicably increase the number of view points provided by the active optical device.

The 3D optical unit may substantially maintain a resolution of the image generated by the image generating unit when separating the image into the plurality of further view points.

According to another general aspect, a method of displaying three-dimensional (3D) images includes emitting light corresponding to an image, separating the image into a plurality of 3D view points, and changing a path of the light corresponding to the image to provide the image with a plurality of positional view points.

A 3D optical unit may separate the image into the plurality of 3D view points, and an active optical device may change the path of the light corresponding to the image.

### BRIEF DESCRIPTION OF THE DRAWINGS

FIG. 1 is a schematic diagram illustrating an example of a multi-view point 3D image display apparatus.
FIGS. 2A, 2B, and 2C are diagrams illustrating an example of an active optical device that may be included in the multi-view point 3D image display apparatus of FIG. 1.
FIGS. 3A, 3B, and 3C are diagrams illustrating another example of an active optical device that may be included in the multi-view point 3D image display apparatus of FIG. 1.
FIG. 4 is a diagram illustrating an example of an optical plate used in a multi-view point 3D image display apparatus.
FIG. 5 is a diagram illustrating an example of an electro-wetting prism used in a multi-view point 3D image display apparatus.
FIG. 6 is a schematic diagram illustrating an example of forming a 3D image point in a display apparatus.
FIG. 7 is a schematic diagram illustrating another example of a multi-view point 3D image display apparatus.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following detailed description is provided to assist the reader in gaining a comprehensive understanding of the methods, apparatuses, and/or systems described herein. Accordingly, various changes, modifications, and equivalents of the systems, apparatuses and/or methods described herein will be suggested to those of ordinary skill in the art. Also, descriptions of well-known functions and constructions may be omitted for increased clarity and conciseness.

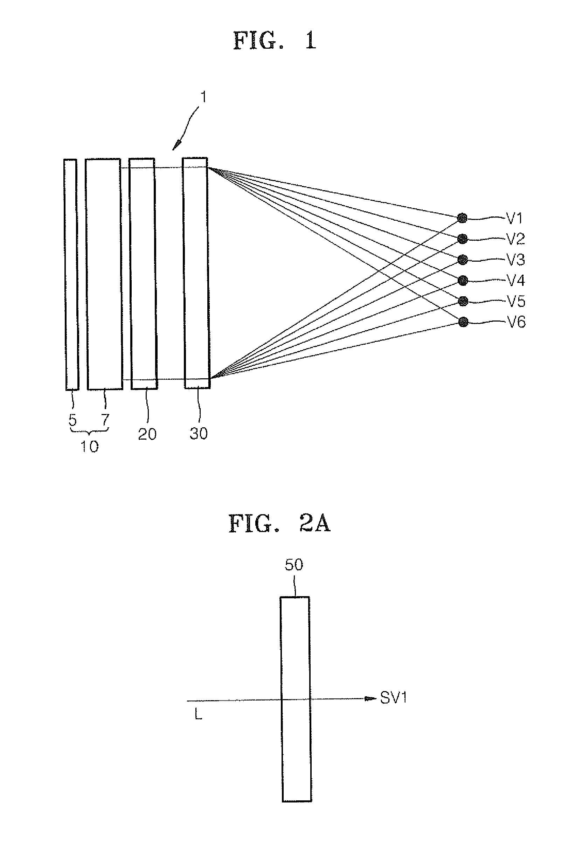

FIG. 1 illustrates an example of a super multi-view point 3D image display apparatus 1. Referring to FIG. 1, the super multi-view point 3D image display apparatus 1 may include an image generating unit 10 for generating an image, and an active optical device 30 for changing a path of light received from the image generating unit 10. The super multi-view point 3D image display apparatus 1 may further include a 3D optical unit 20, disposed between the image generating unit 10 and the active optical device 30, for separating view points.

The image generating unit 10 may include a light source 5 and a display panel 7. The display panel 7 may form the image according to light received from the light source 5. For example, the display panel 7 may include a liquid crystal display (LCD), a digital micromirror device (DMD), a liquid crystal on silicon (LCOS), or a spatial light modulator (SLM). The active optical device 30 may change a path of light of the image according to multi-view points v1, v2, v3, v4, v5, and v6. It is noted that, while six multi-view points are illustrated, any number of multi-view points may be provided by the active optical device 30. The active optical device 30 may provide, for example, an image having a plurality of view points in a time sequential manner by adjusting an angle of refraction of light with respect to each of the multi-view points.

As one example, the active optical device 30 may be implemented as an optical plate capable of rotating at a relatively high speed.

FIGS. 2A through 2C illustrate an example of an optical plate 50. The optical plate 50 may be formed of a material having a different refractive index from a neighboring layer to thereby change a path of light. For example, the optical plate 50 may be formed of a light transparent material having a different refractive index from air. The optical plate 50 may rotate by a desired angle in a mechanical and/or electrical manner. The path of light may change according to a rotation angle of the optical plate 50.

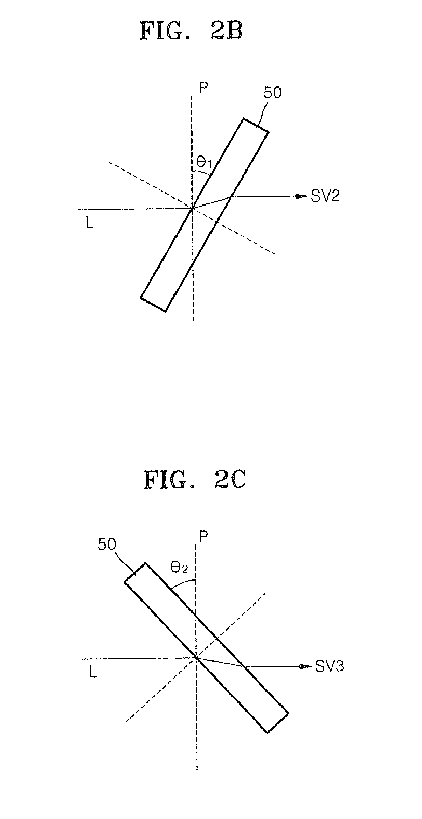

Referring to FIG. 2A, if the optical plate 50 is not rotated (and thus is positioned substantially perpendicular to a direction of light L), the light L may be focused at a first view point sv1 by the optical plate 50. Referring to FIG. 2B, if the optical plate 50 is inclined at a first angle θ1 with respect to a line p that is substantially perpendicular to the direction of the light L, the light L may be refracted by the optical plate 50 and focused at a second view point sv2, different from the first view point sv1. Referring to FIG. 2C, if the optical plate 50 is inclined at a second angle θ2 with respect to a line p that is substantially perpendicular to the direction of the light L, the light L may be refracted in the optical plate 50 and focused at a third view point sv3, different from the first view point sv1 and the second view point sv2. Although the image may be focused at three view points as described above with respect to FIGS. 2A through 2C, the number of view points may be adjusted according to the rotation angle of the optical plate 50. Further, distances between view points may be adjusted according to the rotation angle of the optical plate 50. Thus, an image having a plurality of view points may be provided to a viewer in a time sequential manner.

The image generating unit 10 may sequentially generate images having different view points. The optical plate 50 may be driven substantially in synchronization with the sequentially generated images output by the image generating unit 10. For example, when the image generating unit 10 outputs a first view point image, the optical plate 50 may be driven to be substantially perpendicular as illustrated in FIG. 2A. When the image generating unit 10 outputs a second view point image, the optical plate 50 may rotate to the first angle θ1 as illustrated in FIG. 2B. When the image generating unit 10 outputs a third view point image, the optical plate 50 may rotate to the second angle θ2 as illustrated in FIG. 2C. Additional view point images may be displayed according to a driving speed and a rotation angle of the optical plate 50.

Meanwhile, the 3D optical unit 20 may be implemented by, for example, a device capable of separating viewing zones, such as a lenticular lens array, a microlens array, or a parallax barrier. The 3D optical unit 20 may enable the images generated by the image generating unit 10 to be separately focused at a plurality of view points. Separating view points by the 3D optical unit 20 may be performed according to various operations that will be readily apparent to one skilled in the art, and thus a detailed description thereof will be skipped. The 3D optical unit 20 and the active optical device 30 may increase the number of view points. For example, if the 3D optical unit 20 displays an image of two view points, and the active optical device 30 displays an image of three view points, an image of six view points may be generated. As another example, if the 3D optical unit 20 displays an image of eight view points, and the active optical device 30 displays an image of five view points, an image of forty view points may be generated. In this manner, the active optical device 30 may increase the number of view points. Because the active optical device 30 changes light paths of the images generated by the image generating unit 10 and changes view points, the number of view points may be increased without a reduction of resolution. Therefore, the active optical device 30 may realize a super multi-view point 3D image without a reduction of resolution.

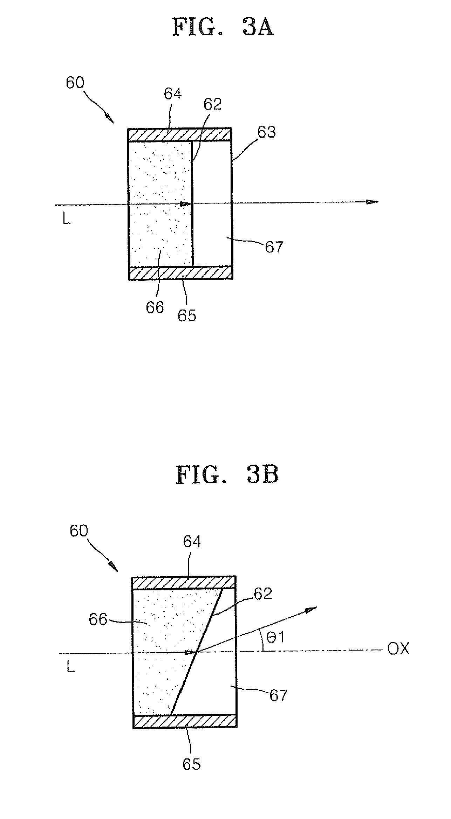

Another example of the active optical device 30 may be an electro-wetting prism. FIGS. 3A through 3C illustrate an example of an electro-wetting prism 60. The electro-wetting prism 60 may adjust an inclination of a refractive surface 62 according to an electrical signal, thereby adjusting an output direction of light. The inclination of the refractive surface 62 may be adjusted to control a direction of light, resulting in multi-view points. The electro-wetting prism 60 may include a first electrode 64 and a second electrode 65 within a barrier wall 63, a polarizable liquid 66 (for example, water), between the first electrode 64 and the second electrode 65, and a nonpolar liquid 67 (for example, oil). A boundary surface between the polarizable liquid 66 and the nonpolar liquid 67 forms the refractive surface 62. The inclination of the refractive surface 62 may change according to an application of a voltage. Thus, the output direction of light may be controlled by turning on or off the voltage of the first electrode 64 and the second electrode 65, or by adjusting magnitude of the voltage of the first electrode 64 and the second electrode 65. Although an electro-wetting principle is described above to adjust the output direction of light, the present example is not limited thereto. For example, if polarized light is used to form an image, liquid crystal may be used to adjust the output direction of light. In this example, an arrangement of liquid crystal molecules may change according to a magnitude of an electric field formed by a voltage applied to an electrode, and thus a property of a change in the refractive index of liquid crystal may be applied.

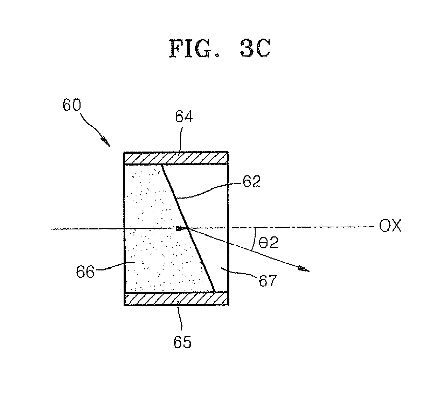

FIGS. 3A through 3C illustrate an operation of the electro-wetting prism 60. Referring to FIG. 3A, if the refractive surface 62 of the electro-wetting prism 60 is not substantially inclined, light L passes through the electro-wetting prism 60 without a substantial change in the path of the light L. Referring to FIG. 3B, if the refractive surface 62 is inclined at a first angle θ1 by electrically controlling the electro-wetting prism 60, the light L may be refracted at an angle of θ1 with respect to an optical axis OX that is substantially co-linear or parallel to the direction of the light L. The light L may be refracted according to the refractive surface 62 while passing through the electro-wetting prism 60. Referring to FIG. 3C, if the refractive surface 62 is inclined at a second angle θ2 by electrically controlling the electro-wetting prism 60, the light L may be refracted at an angle of θ2 with respect to the optical axis OX. The light L may be refracted according to the refractive surface 62 while passing through the electro-wetting prism 60.

The electro-wetting prism 60 may be driven substantially in synchronization with the sequentially generated images output by the image generating unit 10. For example, when the image generating unit 10 outputs the first view point image, the electro-wetting prism 60 may be driven without substantial inclination as illustrated in FIG. 3A. When the image generating unit 10 outputs the second view point image, the electro-wetting prism 60 may be inclined at the first angle θ1 as illustrated in FIG. 3B. When the image generating unit 10 outputs the third view point image, the electro-wetting prism 60 may be inclined at the second angle θ2 as illustrated in FIG. 3C. Additional view point images may be displayed according to a driving speed and an inclination of the refractive surface 62 of the electro-wetting prism 60.

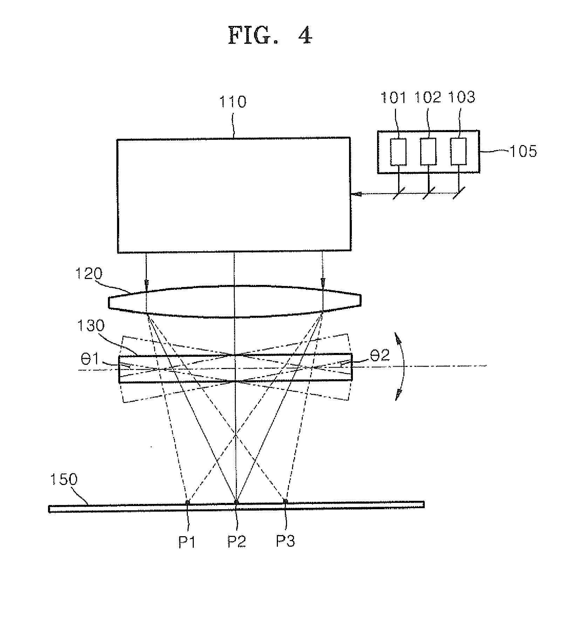

FIG. 4 illustrates an example of an active optical device 130 applied to a holographic 3D printing system. The holographic 3D printing system may generate a hologram pattern according to an interference of subject light and reference light, and may record the generated hologram pattern on a recording medium. The holographic 3D printing system may include a light source unit 105 including a first color light source 101, a second color light source 102, a third color light source 103. The holographic 3D printing system may also include a recording system 110 including an optical system to record parallax color information for each pixel in the general shape of a volume hologram to generate a 3D image. Accordingly, the holographic 3D printing system may be used as an image generating unit. The size of the holographic 3D printing system may be reduced, and the number of 3D image points may be increased by implementing the active optical device 130. The active optical device 130 may be included in a lower portion of the recording system 110. A hologram image generated by the recording system 110 may be recorded in the recording medium 150 by controlling the active optical device 130.

An optical plate may be implemented as the active optical device 130. The optical plate may be formed of a material having a different refractive index from that of a neighboring layer, and may change a path of light by adjusting an inclination thereof. For example, if the active optical device 130 is disposed substantially horizontally, the hologram image may be recorded at a first view point p1. If the active optical device 103 is inclined at the first angle θ1, the hologram image may be recorded at a second view point p2. If the active optical device 130 is inclined at the second angle θ2, the hologram image may be recorded at a third view point p3. Meanwhile, a lens 120 may be further disposed between the recording system 110 and the active optical device 130.

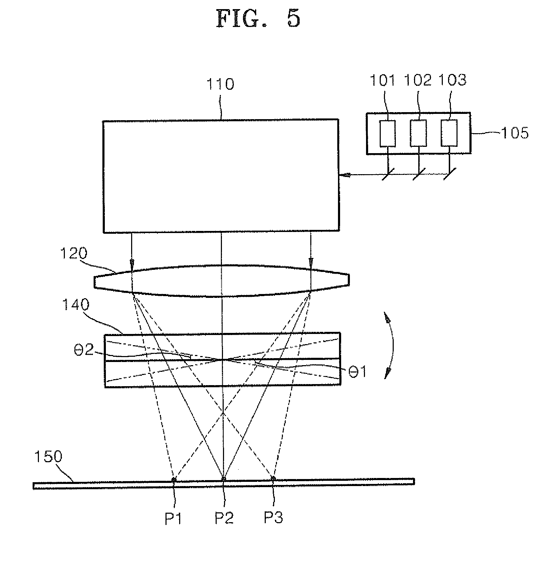

FIG. 5 illustrates an example of an electro-wetting prism 140 applied as an active optical device in a holographic 3D printing system. The electro-wetting prism 140 may change an inclination of a refractive surface between a polarizable liquid and a nonpolar liquid according to an application of a voltage, and thus a path of light may change. For example, if the electro-wetting prism 140 is driven without substantial inclination, a hologram image may be recorded at the first view point p1. If the refractive surface of the electro-wetting prism 140 is inclined at the first angle θ1, the hologram image may be recorded at the second view point p2. If the refractive surface of the electro-wetting prism 140 is inclined at the second angle θ2, the hologram image may be recorded at the third view point p3. As described above, a hologram image generated by a recording system of a holographic 3D printing system may be focused at multi-view points in a time sequential manner by implementing an active optical device.

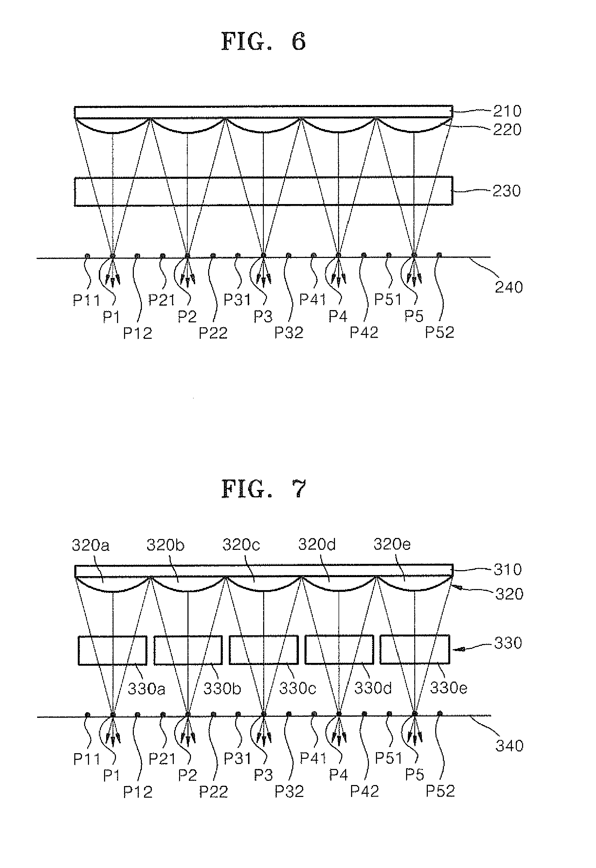

FIG. 6 illustrates an example of forming a 3D image point in a recording medium or in a display apparatus 240. Light including image information generated by an image generating unit 210 may form the 3D image point of multi-view points in the recording medium (or in the display apparatus 240) through a lens 220 and an active optical device 230. The image generating unit 210 may include a display panel for forming an image according to light irradiated from a light source. For example, the image generating unit 210 may include any one of a liquid crystal display (LCD), a digital micromirror device (DMD), a liquid crystal on silicon (LCOS), or a spatial light modulator (SLM).

The lens 220 may be a lenticular lens array or a micro lens array. If the lens 220 is formed as a lenticular lens array, a 3D image of a horizontal parallax may be focused on an image point. If the lens 220 is formed as a micro lens array, a 3D image of a full parallax may be focused on an image point. The active optical device 230 may be, for example, an optical plate that may rotate to a predetermined angle, or an electro-wetting prism 60. For example, if a refractive surface of the active optical device 230 is in a substantially horizontal state, an image may be formed at first through fifth view points p1, p2, p3, p4, and p5. If the refractive surface of the active optical device 230 is inclined at a first angle, an image may be formed at sixth through tenth view points p11, p21, p31, p41, and p51. If refractive surface of the active optical device 230 is inclined at a second angle, an image may be formed at eleventh through fifteenth view points p12, p22, p33, p42, and p52. As described above, the active optical device 230 may be used to increase the number of view points without a reduction of resolution.

Meanwhile, FIG. 7 illustrates another example of a multi-view point 3D image display apparatus. Referring to FIG. 7, light including image information generated by an image generating unit 310 may form the 3D image point of multi-view points in a recording medium (or in a display apparatus 340) through a lens 320 and an active optical device array 330. The lens array 320 may include, for example, first through fifth lenses 320a, 320b, 320c, 320d, and 320e. The active optical device array 330 may include first through fifth active optical devices 330a, 330b, 330c, 330d, and 330e corresponding to the lens array 320. The first through fifth active optical devices 330a, 330b, 330c, 330d, and 330e may be individually driven.

The 3D display apparatus may provide an image of a plurality of view points by implementing an active optical device that may change a path of light, thereby avoiding a substantial drop in resolution when multi-view points or super multi-view points are realized.

The 3D display apparatus provides a viewer with an image of at least two view points, and thus the viewer may observe a relatively natural 3D stereo image without substantial interference due to crosstalk. Further, the viewer may observe a cubic effect with single eye. The cubic effect may be realized, for example, by the holographic 3D printing system.

A 3D display apparatus as described in the above examples may be included in an electronic device. As a non-exhaustive illustration only, an electronic device described herein may refer to mobile devices such as a a portable game console, a portable/personal multimedia player (PMP), a portable lap-top PC, and devices such as a desktop PC, a high definition television (HDTV), and the like capable of wireless communication or network communication consistent with that disclosed herein.

It should be understood that the examples described herein should be considered in a descriptive sense only and not for purposes of limitation. Descriptions of features or aspects within each embodiment should typically be considered as available for other similar features or aspects in other embodiments. Further, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A three-dimensional, 3D, display apparatus comprising:
an image generating unit (10,110,210,230) which is arranged to emit light corresponding to an image; and
an active optical device (30,130,140,230,330) which is arranged to change a path of the light corresponding to the image to provide the image to a plurality of view points.

2. The 3D display apparatus of claim 1, further comprising: a 3D optical unit (20,120,220,320) which separates a view point of the image generated by the image generating unit (10) into a plurality of further view points, wherein the 3D optical unit (20) is disposed between the image generating unit (10) and the active optical device (30).

3. The 3D display apparatus of claim 2, wherein the 3D optical unit (30) comprises any one selected from the group of a lenticular lens array, a micro lens array, and a parallax barrier.

4. The 3D display apparatus of any preceding claim, wherein the active optical device comprises an optical plate (50) formed of a material having a different refractive index from an adjacent layer which changes a direction of refraction of light by adjusting a rotation angle of the optical plate, mechanically, electrically, or a combination thereof.

5. The 3D display apparatus of claim 1, 2 or 3 wherein the active optical device comprises an electro-wetting prism (60) having a refractive surface, a slope of which is changed according to an application of a voltage to the active optical device.

6. The 3D display apparatus of any preceding claim, wherein the image generating unit (10,110,210,310) comprises any one selected from the group of a liquid crystal display (LCD), a digital micromirror device (DMD), a liquid crystal on silicon (LCOS), and a spatial light modulator (SLM).

7. The 3D display apparatus of any of claims 1 to 4, wherein the image generating unit (110) comprises a holographic 3D printing system.

8. The 3D display apparatus of claim 7, wherein the holographic 3D printing system comprises:
a light source unit (105) comprising a plurality of color light sources (101,102,103); and
a recording system (110) which records parallax color information for each pixel, with respect to a shape of a volume hologram, to generate a 3D image.

9. The 3D display apparatus of claim 1, wherein said active optical device is disposed in an array of a plurality of active optical devices(330), the 3D display apparatus comprising said array of a plurality of active optical devices and wherein each of the plurality of active optical devices is individually driven.

10. The 3D display apparatus of any preceding claim, wherein the image generating unit (10,110,210,310) is arranged to generate images for different view points in a time sequential manner.

11. The 3D display apparatus of any preceding claim, wherein the active optical device refracts light with respect to different view points at different angles substantially in synchronization with the image generating unit.

12. The 3D display apparatus of claim 9, wherein the 3D optical unit (20,120,220,320) cooperates with the active optical device (30,130,140,230,330) to provide a number of view points that is a multiple of the number of viewpoints generated by the active optical device (30,130,140,230,330).

13. The 3D display apparatus of claim 9, wherein the 3D optical unit (20,120,220,320) substantially maintains a resolution of the image generated by the image generating unit when separating the image into the plurality of further view points.

14. A method of displaying three-dimensional,3D, images, the method comprising:
emitting light corresponding to an image;
separating the image into a plurality of 3D view points; and
changing a path of the light corresponding to the image to provide the image with a plurality of positional view points.

15. The method of claim 14, wherein a 3D optical unit (20) separates the image into the plurality of 3D view points, and an active optical device (30) changes the path of the light corresponding to the image.
